Europäisches Patentamt

European Patent Office

Office européen des brevets

(11) Publication number: **0 276 941 B1**

# EUROPEAN PATENT SPECIFICATION

(45) Date of publication of patent specification: **22.07.92** (51) Int. Cl.⁵: **G11B 23/04, G11B 23/087**

(21) Application number: **88300403.8**

(22) Date of filing: **19.01.88**

(54) Tape cassette reels.

(30) Priority: **27.01.87 JP 16700/87**

(43) Date of publication of application:
**03.08.88 Bulletin 88/31**

(45) Publication of the grant of the patent:
**22.07.92 Bulletin 92/30**

(84) Designated Contracting States:
**DE ES FR GB IT NL**

(56) References cited:
**EP-A- 0 137 929**
**EP-A- 0 267 616**
**DE-A- 3 222 632**
**GB-A- 2 119 752**

**PATENT ABSTRACTS OF JAPAN, vol. 12, no. 4 (M-657)(2851), 8th January 1988; & JP-A-62 170 309**

(73) Proprietor: **SONY CORPORATION**
**7-35 Kitashinagawa 6-chome Shinagawa-ku Tokyo 141(JP)**

(72) Inventor: **Tateno, Shigeru c/o Patent Division Sony Corporation 7-35 Kitashinagawa Shinagawa-ku Tokyo 141(JP)**
Inventor: **Yamashina, Shuichi c/o Patent Division**
**Sony Corporation 7-35 Kitashinagawa Shinagawa-ku Tokyo 141(JP)**

(74) Representative: **Thomas, Christopher Hugo et al**
**D Young & Co 10 Staple Inn**
**London WC1V 7RD(GB)**

## Description

This invention relates to tape cassette reels suitable for use, for example, in a video cassette.

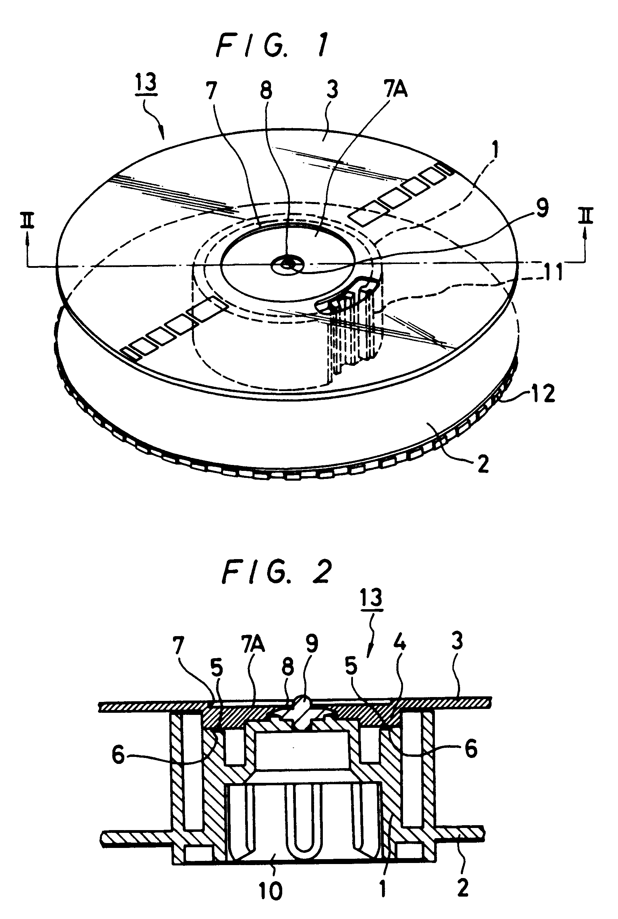

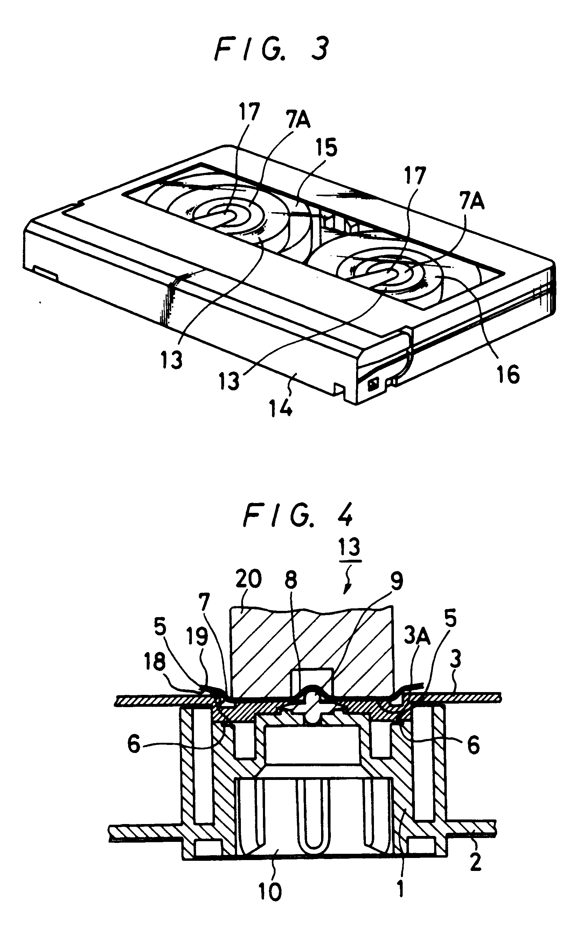

Various tape cassette reels have been proposed for use in a video cassette, and Figures 1 and 2 of the accompanying drawings illustrate an example. Figure 1 is a perspective view, and Figure 2 is a cross-sectional view along a line II - II in Figure 1. Figure 3 shows a video cassette having therein two cassette reels 13.

The tape cassette reel 13 comprises a hub 1 moulded integrally with a lower flange 2 and an upper flange 3 fixed to the upper end face of the hub 1. The upper flange 3 is formed of a transparent plastics plate and has a plurality of projections 5 protruding from a stepped portion 4 of the lower surface thereof as shown in Figure 2. The projections 5 are welded to an upper end face 6 of the hub 1 by ultrasonic welding to fix the upper flange 3 to the upper end face 6 of the hub 1. A concave portion 7 is formed on the upper surface of the upper flange 3 is an opposing relation to the hub 1. The concave portion 7 is circular, and the diameter thereof is slightly smaller than that of the hub 1. An opening 8 is formed through the central portion of the concave portion 7. A centre pin 9 contacts a cassette reel pressing spring 17 (Figure 3) provided in a video cassette housing 14 (Figure 3). The centre pin 9 is loosely held between the central lower surface of the upper flange 3 and the central upper end face of the hub 1. As illustrated in Figure 2, a hole 10 is formed on the lower surface of the hub 1, and is engaged with a hub drive shaft provided in a main body of a video tape recorder (not shown). A clamp engaging member 11 is formed on the peripheral surface of the hub 1, and serves to fix a tape end of a video tape in cooperation with a clamp (not shown). The lower flange 2 has around its outer peripheral surface a gear portion 12 which engages with a reel brake (not shown).

As shown in Figure 3, a window 15 made of a transparent plastics plate is formed through the upper surface of the housing 14 of the cassette. Through the window 15, the user can check the amount of a video tape 16 on the cassette reels 13. However, there is the defect that the inside structure of the hub 1 is inevitably seen through a concave bottom 7A of the transparent upper flange 3. This degrades the appearance of the video cassette.

To avoid this defect, we have proposed in Japanese Patent Application No. 61/269402 a cassette reel 13 as shown in Figure 4 of the accompanying drawings in which a transferrable leaf film 19, on which a transferrable gold leaf 18 is deposited, is placed on the concave bottom 7A of the upper flange 3 and pressed thereon by a heated hard rubber member 20, so that the gold leaf 18 is transferred to the concave bottom 7A by so-called hot stamping or hot-press printing. In this way the inside structure of the hub 1 is hidden. However, the use of the gold leaf 18 increases the manufacturing cost.

According to the present invention there is provided a tape cassette reel comprising:
a hub;
a lower flange integrally moulded with said hub; and
an upper flange having a central portion and a peripheral portion made of a transparent resinous material, said upper flange being fixed at its central portion to an upper end face of said hub; characterised in that the central portion is made of an opaque homogeneous material of a predetermined colour.

The invention will now be described by way of example with reference to the accompanying drawings, throughout which like parts are referred to by like references, and in which:

Figure 1 is a perspective view of a previously proposed cassette reel;

Figure 2 is a cross-sectional view along line II - II of Figure 1;

Figure 3 is a perspective view of a video cassette;

Figure 4 is a cross-sectional side view of another previously proposed cassette reel;

Figure 5 is a perspective view of an embodiment of cassette reel according to the present invention;

Figure 6 is a partially cross-sectional view along line VI - VI of Figure 5; and

Figure 7 is a plan view of the embodiment.

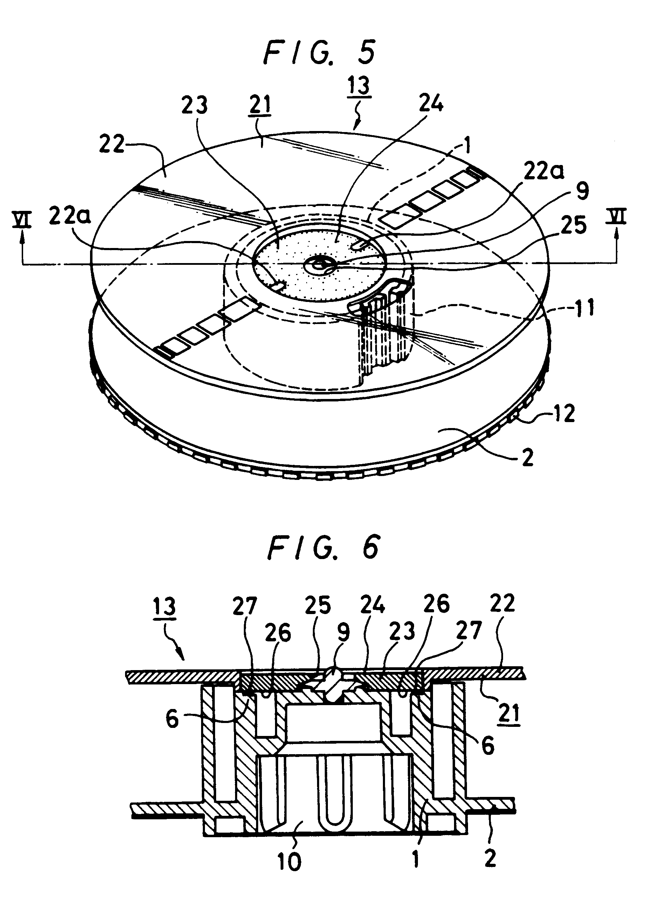

The embodiment to be described with reference to Figures 5 to 7 is a cassette reel for a video cassette, and is generally similar to the cassette reel shown in Figure 1.

In the embodiment, as shown in Figures 5 and 6, the hub 1 is moulded with the lower flange 2, and coupled to an upper flange 21. The upper flange 21 is moulded with a transparent portion 22 and a coloured portion 23. The central portion of the disc-shaped upper flange 21 is moulded of a synthetic resin which is coloured silver or the like to form the coloured portion 23, while the peripheral portion surrounding the coloured portion 23 is moulded of a transparent synthetic resin to form the transparent portion 22. The diameter of the coloured portion 23 is slightly less than that of the hub 1. An upper surface 24 of the coloured portion 23 is recessed by a very small amount relative to the upper surface of the transparent portion 22. The coloured portion 23 has an opening 25 formed through its centre to let the centre pin 9 protrude.

The coloured portion 23 has a plurality or projections 27 on its lower surface 26, and the transparent portion 22 has a pair of protrusions 22a extending into the recessed upper surface 24 of the coloured portion 23. The coloured portion 23 and the transparent portion 22 are made of synthetic resin, such as acrylonitrile butadiene styrene polymer or styrene acrylonitrile polymer. The coloured portion 23 and the transparent portion 22 are formed by dichromatic moulding in which resins of two colours (two kinds) are moulded by a set of metal moulds so that the respective moulded parts are welded to one another.

The thus moulded upper flange 21 is fixed to the hub 1 by welding the projections to the upper end face 6 of the hub 1 by ultrasonic welding, as shown in Figure 6. The remainder of the cassette reel 13 is constructed in the same way as that of Figure 1.

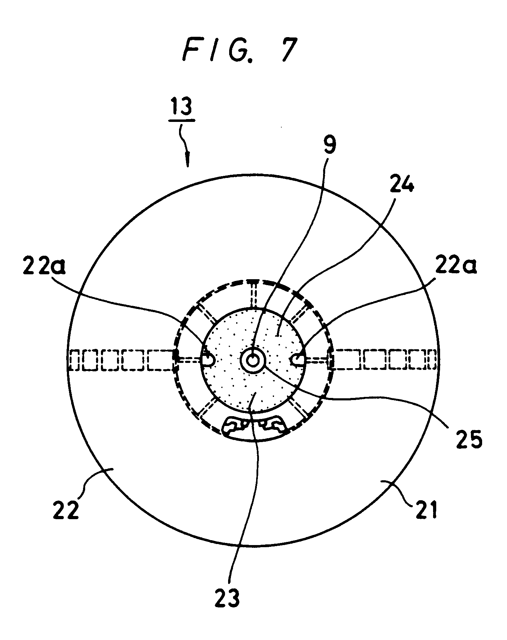

With this arrangement, as shown in Figures 5 and 7, the silver coloured portion 23 of the upper flange 21 hides the inside structure of the hub 1, while the transparent portion 22 enables the user to check the amount of tape wrapped around the cassette reel 13. Moreover, the coloured portion 23 can be decorative.

With this embodiment, the above-mentioned process for printing the gold leaf by hot stamping is not required, so reducing the manufacturing cost. Moreover, the coloured portion 23 can be made in any of a wide variety of colours by changing the material of the synthetic resin.

In an alternative embodiment, the coloured portion 23 is formed of a metal plate of a predetermined colour, which is disposed within the metal mould when the transparent portion 22 is formed, so as to be incorporated in the transparent portion 22 by so-called outsert moulding.

## Claims

1. A tape cassette reel (13) comprising:
a hub (1);
a lower flange (2) integrally moulded with said hub (1); and
an upper flange (21) having a central portion (23) and a peripheral portion (22) made of a transparent resinous material, said upper flange being fixed at its central portion (23) to an upper end face (6) of said hub (1); characterised in that the central portion (23) is made of an opaque homogeneous material of a predetermined colour.

2. A reel (13) according to claim 1 wherein said central portion (23) of said peripheral portion (22) of said upper flange (21) are each made of synthetic resinous material and are moulded in a dichromatic manner.

3. A reel (13) according to claim 1 or claim 2 wherein said synthetic resin is acrylonitrile butadiene styrene polymer or styrene acrylonitrile polymer.

4. A reel (13) according to claim 2 or claim 3 wherein said predetermined colour of said central portion (23) is determined by the colour of said synthetic resinous material.

5. A reel (13) according to any one of the preceding claims wherein said predetermined colour of said central portion (23) is silver.

6. A reel (13) according to claim 1 wherein said central portion (23) is a metal plate of a predetermined colour.

## Revendications

1. Bobine de cassette à bande (13) comportant :
un moyeu (1);
un flasque inférieur (2) moulé d'un seul tenant avec ledit moyeu (1); et
un flasque supérieur (21) ayant une partie centrale (23) et une partie périphérique (22) réalisée en résine transparente, ledit flasque supérieur étant fixé au niveau de sa partie centrale (23) à une face d'extrémité supérieure (6) dudit moyeu (1);
caractérisée en ce que la partie centrale (23) est réalisée en matière homogène opaque d'une couleur prédéterminée.

2. Bobine (13) selon la revendication 1, dans laquelle ladite partie centrale (23) et ladite partie périphérique (22) dudit flasque supérieur (21) sont réalisées chacune en résine synthétique et sont moulées d'une manière dichromatique.

3. Bobine (13) selon la revendication 1 ou la revendication 2, dans laquelle ladite résine synthétique est un polymère acrylonitrile butadiène styrène ou un polymère acrylonitrile styrène.

4. Bobine (13) selon la revendication 2 ou la revendication 3, dans laquelle ladite couleur prédéterminée de ladite partie centrale (23) est déterminée par la couleur de ladite résine synthétique.

5. Bobine (13) selon l'une quelconque des revendications précédentes, dans laquelle ladite couleur prédéterminée de ladite partie centrale (23) est l'argent.

6. Bobine (13) selon la revendication 1, dans laquelle ladite partie centrale (23) est une plaque métallique d'une couleur prédéterminée.

**Patentansprüche**

1. Eine Kassettenbandspule (13) mit:
einer Nabe (1);
einem unteren Flansch (2), der einstückig mit der Nabe (1) geformt ist; und
einem oberen Flansch (21), der einen zentralen Teil (23) und einen aus einem transparenten Harzmaterial hergestellten peripheren Teil (22) aufweist, wobei der obere Flansch mit seinem zentralen Teil (23) an einer oberen Stirnfläche (6) der Nabe (1) befestigt ist; dadurch gekennzeichnet, daß der zentrale Teil (23) aus einem undurchsichtigen, homogenen Material einer vorbestimmter Farbe hergestellt ist.

2. Eine Spule (13) nach Anspruch 1, in welcher der zentrale Teil (23) und der periphere Teil (22) des oberen Flansches (21) je aus Kunstharzmaterial hergestellt und in einer dichromatischen Weise geformt sind.

3. Eine Spule (13) nach Anspruch 1 oder Anspruch 2, in welcher das Kunstharz Akrylnitril-Butadien-Styrol-Polymer oder Styrol-Akrylnitril-Polymer ist.

4. Eine Spule (13) nach Anspruch 2 oder Anspruch 3, in welcher die vorbestimmte Farbe des zentralen Teils (23) durch die Farbe des Kunstharzmaterials bestimmt ist.

5. Eine Spule (13) nach einem der vorhergehenden Ansprüche, in welcher die vorbestimmte Farbe des zentralen Teils (23) Silber ist.

6. Eine Spule (13) nach Anspruch 1, in welcher der zentrale Teil (23) eine Metallplatte mit einer vorbestimmten Farbe ist.

# F I G. 1

# F I G. 2

# F I G. 3

# F I G. 4

EP 0 276 941 B1

## F I G. 5

## F I G. 6

# F I G. 7